# EUROPEAN PATENT APPLICATION

(11) **EP 3 168 588 A1**
(43) Date of publication of application: **17.05.2017**
(21) Application number: 16194302.2
(22) Date of filing: 18.10.2016
(51) Int. Cl.: G01M 1/04, F16D 1/06, F01D 5/02

(54) **A SYSTEM AND METHOD FOR APPLYING A TENSILE LOAD TO A COMPONENT**

(30) Priority: 10.11.2015 GB 201519792
(71) Applicant: Rolls-Royce plc, London SW1E 6AT (GB)
(72) Inventor: Tye, Christopher, Derby, Derbyshire DE24 8BJ (GB); Beech, Corrie, Derby, Derbyshire DE24 8BJ (GB)
(74) Representative: Rolls-Royce plc

(57) **Abstract**

A protective assembly engaging in case of tensile failure comprising an elongate tubular member, and a catcher rod.

The tubular member has a first end portion and an opposite second end portion, and a fuse portion is positioned between the first end portion and the second end portion. A cross-sectional area of the tubular member is reduced at the fuse portion.

The catcher rod has a first end portion and an opposite second end portion, with the catcher rod being accommodated concentrically within the tubular member. The second end portion of the catcher rod is secured to the second end portion of the tubular member

The first end portion of the tubular member is provided with a first divergent conical portion, and the first end portion of the catcher rod is provided with a second divergent conical portion.

In the event of breakage of the tubular member, the second divergent conical portion impinges against the first divergent conical portion to limit the axial movement of the tubular member.

## Description

### Field of the Disclosure

The present disclosure relates to a system and method for applying a tensile load to a component and particularly, but not exclusively, to a system and method for applying a tensile load to a component during a test simulation.

### Background to the Disclosure

There are many circumstances in which it is necessary to apply a tensile load to a component such as a shaft or a tie-bolt. One example, which is not to be considered limiting to the scope of the present disclosure, involves mounting a rotor (such as a compressor rotor or a turbine rotor) of a gas turbine engine to a balance simulator, for example during assembly of the rotor. In this type of situation it is known to support the rotor on a shaft which extends outwardly from the balance simulator, through the rotor, and which is bolted to a compression unit adjacent the rotor. The shaft is subjected to a high tensile load between the compression unit and the balance simulator in order to secure the rotor in position therebetween. However, it has been found that the processes of applying the tensile load to the shaft, which can be achieved via a hydraulic arrangement, can involve a risk of component failure due to the high forces involved. In some circumstances, it has been found that such component failure can result in parts of the aforementioned assembly being forcibly released which represents a safety risk for operatives working in the area of the assembly. It is therefore considered advantageous to provide a system for the application of the tensile load which includes a failsafe arrangement in order to reduce such risk.

It is a first object of the present disclosure to provide an improved system for applying a tensile load to a component. It is a second object of the present disclosure to provide a related method of applying a tensile load to a component.

Whilst the system disclosed herein is provided with specific reference to a system for applying a tensile load to a shaft in order to mount a gas turbine engine rotor to a balance simulator in the general manner mentioned above, it is to be appreciated that the disclosure is not limited to this particular use, and could instead be embodied in other systems and methods for applying tensile loads to components.

### Statements of Disclosure

According to a first aspect of the present disclosure there is provided a tension fuse assembly comprising:
an elongate tubular member, the tubular member having a first end portion and an opposite second end portion; and
a catcher rod, the catcher rod having a first end portion and an opposite second end portion, the catcher rod being accommodated concentrically within the tubular member, the second end portion of the catcher rod being secured to the second end portion of the tubular member,
wherein the first end portion of the tubular member is provided with a first divergent conical portion, the first end portion of the catcher rod is provided with a second divergent conical portion, and
in the event of breakage of the tubular member, the second divergent conical portion engages with the first divergent conical portion to limit the axial movement of the tubular member.

The engagement of the first divergent conical portion and the second divergent conical portion provides for the deceleration and containment of the tubular member in the event of a failure of the tubular member. This prevents the tubular member from being projected into a surrounding work space.

Optionally, the first divergent conical portion has a first vertex angle, and the second divergent conical portion has a second vertex angle, and the first vertex angle is greater than the second vertex angle.

This ensures that the engagement of the first divergent conical portion and the second divergent conical portion is governed by an interference fit generated between the first divergent conical portion and the second divergent conical portion.

The selection of the first vertex angle and the second vertex angle enables the operation of the fuse assembly to be tailored to the loads expected in the event of the failure of the tubular member. This makes the fuse assembly more convenient for a user.

Optionally, the first end portion of the tubular member comprises a first cylindrical portion proximal to the first divergent conical portion, and the first end portion of the catcher rod comprises a second cylindrical portion proximal to the second divergent conical portion, the second cylindrical portion being slidably accommodated within the first cylindrical portion.

By slidably accommodating the second cylindrical portion within the first cylindrical portion, the first end portion of the catcher rod is guided into engagement with the first end portion of the tubular member. This ensures the reliable and repeatable engagement of the catcher rod with the tubular member. This in turn makes the operation of the fuse assembly precise and consistent, and so more convenient for a user.

Optionally, the second cylindrical portion is a loose running fit within the first cylindrical portion.

This ensures that there is no frictional load resulting from the movement of the second cylindrical portion within the first cylindrical portion. This in turn ensures that it is only the loads resulting from the engagement of the first divergent conical portion and the second divergent conical portion that contribute towards the absorption of mechanical energy in the event of a failure of the tubular member. This makes the operation of the fuse assembly precise and repeatable and so more convenient for a user.

Optionally, the catcher rod is positioned concentrically within the tubular member with the second divergent conical portion being axially separated from the first divergent conical portion by a pre-determined distance

The pre-determined distance provides a braking distance that allows a fractured tubular member to slow down in the event of a failure prior to the engagement of the first divergent conical portion and the second divergent conical portion.

Optionally, the second cylindrical portion comprises a seal element, the seal element configured to rub against the first cylindrical portion.

The seal element provides a positive location between the tubular member and the catcher rod during normal operation and so prevents fretting between the tubular member and the catcher rod.

The seal element also eliminates fatigue effects from the interface between the first divergent conical portion and the second divergent conical portion by preventing any direct contact between the tubular member and the catcher rod.

In addition, the seal element assists in centralising the first end portion of the catcher rod within the first end portion of the tubular member so as to improve the repeatability of the operation of the fuse assembly.

Optionally, the seal element is selected from the group comprising 'O'-rings, lip seals and ring seals.

Optionally, the catcher rod further comprises a centre portion interposed between the first end portion and the second end portion, the first end portion having a first diameter, the second end portion having a second diameter, the centre portion having a third diameter, and the third diameter being less than the first and second diameters. This ensures that there cannot be any physical contact between the catcher rod and the tubular member in the region between the corresponding respective first end portions and second end portions. This in turn ensures that in the event of a failure of the tubular member, it is the interaction between the corresponding first end portions of the catcher rod and the tubular member that engage to trap the failed tubular member.

Optionally, the centre portion comprises an inspection feature, a cross-sectional area of the tubular member at the inspection feature being less than the cross-sectional area of the tubular member along the remainder of the centre portion.

The inspection feature, having a smaller cross-sectional area than the remainder of the tubular member, provides an inspection area that can be used to determine the serviceability of the tubular member.

Optionally, the first end portion of the catcher rod further comprises a third cylindrical portion distal to the second divergent conical portion.

The third cylindrical portion provides axial support to the first divergent conical portion during engagement of the first divergent conical section and the second divergent conical section. This prevents axial deformation of the first divergent conical portion past the first end of the catcher rod, which ensures the energy dissipation mechanism of the fuse assembly operates in the designed manner.

According to a second aspect of the present disclosure there is provided a method of applying a tensile load to a component, using a tension fuse assembly, the tension fuse assembly comprising an elongate tubular member and a catcher rod, the tubular member having a first end portion and a second end portion, the catcher rod having a first end portion and a second end portion, the first end portion of the tubular member being provided with a first divergent conical portion, the first end portion of the catcher rod being provided with a second divergent conical portion, the method comprising the steps of:
positioning the catcher rod concentrically within the tubular member;
securing the second end portion of the catcher rod to the second end portion of the tubular member;
positioning the component over the first end of the tubular member;
securing a tensioning mechanism to the first end of the tubular member;
applying a tensile force between the first end of the tubular member and the component; and
in the event of a breakage of the tubular member, the second divergent conical portion engages with the first divergent conical portion to limit the axial movement of the tubular member, the component and the tensioning mechanism.

The engagement of the first divergent conical portion and the second divergent conical portion provides for the deceleration and containment of the tubular member in the event of a failure of the tubular member. This prevents the tubular member from being projected into a surrounding work space.

Optionally, the step of positioning the catcher rod concentrically within the tubular member comprises the step of:
positioning the catcher rod concentrically within the tubular member such that the second divergent conical portion is axially separated from the first divergent conical portion by a pre-determined distance.

The pre-determined distance provides a braking distance that allows a fractured tubular member to slow down in the event of a failure prior to the engagement of the first divergent conical portion and the second divergent conical portion.

Other aspects of the disclosure provide devices, methods and systems which include and/or implement some or all of the actions described herein. The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:
Figure 1 is a perspective illustration showing a compressor rotor mounted to a balance simulator, in combination with a hydraulic system;
Figure 2 is a schematic cross-sectional view taken through the arrangement of Figure 1;
Figure 3 is a schematic cross-sectional view through a tension fuse assembly in accordance with an embodiment of the disclosure, showing the structure in a normal condition;
Figure 4 is a schematic cross-sectional view of the first ends of the tubular member and catcher rod of the assembly of Figure 3 in a normal condition;
Figure 5 shows a schematic sectional view of a compressor rotor mounted to the tension fuse assembly of Figure 3, in combination with a hydraulic system; and
Figure 6 shows a view of a partially sectioned tension fuse assembly of the disclosure in an actuated condition.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

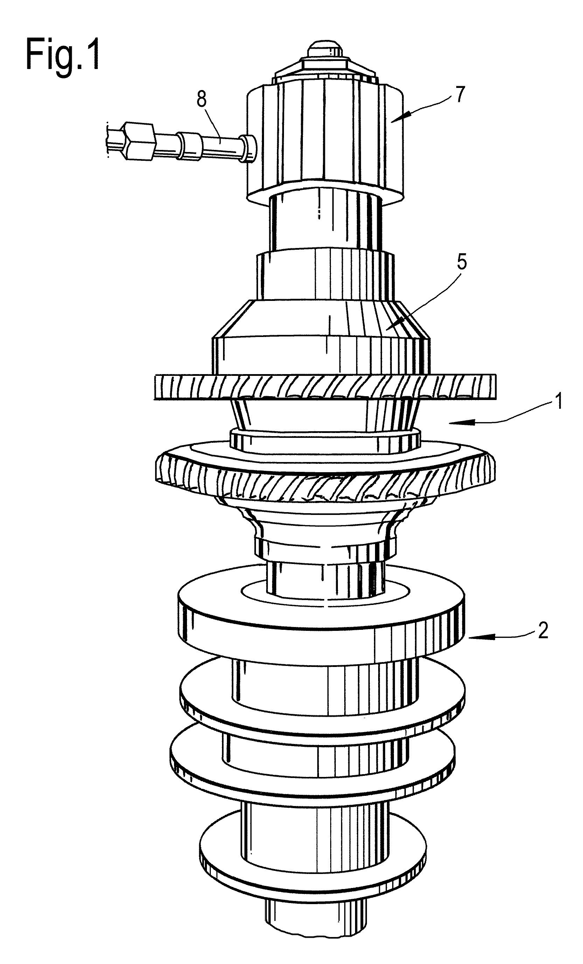

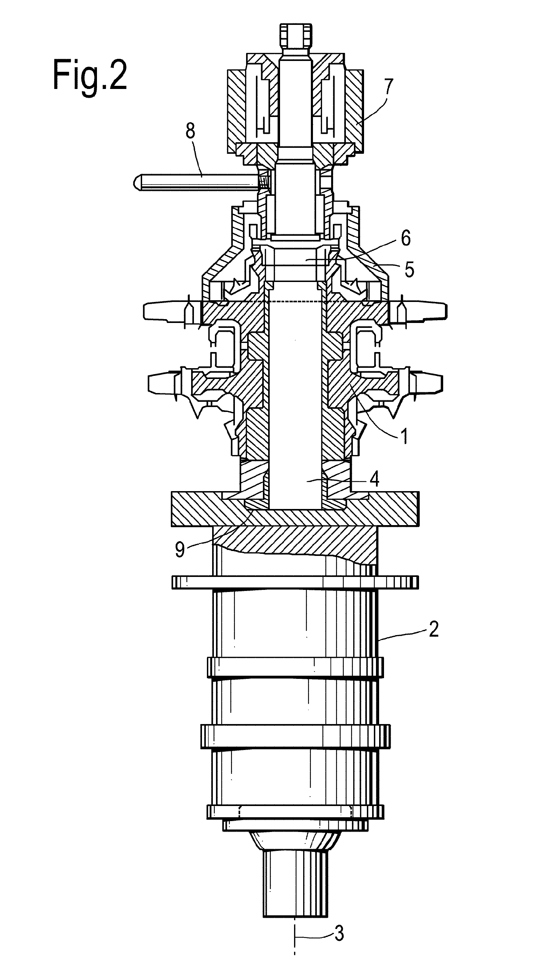

Turning now to consider the drawings in more detail, Figures 1 and 2 illustrate a gas turbine engine rotor 1 mounted to a balance simulator 2. The rotor 1 may take the form of a compressor rotor, or a turbine rotor.

As illustrated most clearly in Figure 2, the rotor 1 is mounted co-axially with the balance simulator 2 for co-rotation with the balance simulator about a longitudinal axis 3. More particularly, the rotor 1 is mounted to a shaft 4 which extends (vertically in the orientation illustrated) outwardly from the balance simulator 2 along the axis 3. The rotor 1 is mounted so as to axially abut the balance simulator 2, and is clamped tightly between the balance simulator 2 and a compression unit 5 which is tightly connected to the shaft 4 via a nut 6.

In order to ensure that the rotor 1 is securely clamped between the balance simulator 2 and the compression unit 5, a large tensile load is applied to the shaft 4 prior to the compression unit 5 being connected to the shaft 4 via the nut 6, thereby effectively stretching the shaft 4. This is achieved by using a hydraulic arrangement 7 which is arranged so as to bear against the compression unit 5 and which is actuatable, via a supply of hydraulic fluid which is flowed into the arrangement via an inlet duct 8, in order to apply the necessary tensile load to the shaft 4. When the appropriate load is applied to the shaft 4 the compression unit 5 is secured to the shaft 4 by tightening the nut 6, after which the hydraulic arrangement 7 can be removed, leaving the rotor 1 tightly clamped between the balance unit 2 and the compression unit 5.

However, as indicated above, the tensile load which is required to be applied to the shaft 4 in this type of assembly is very high, and sometimes defects in the shaft 4 or other components can result in failure of the assembly, particularly during the process of applying the tensile load to the shaft 4 before the compression unit 5 is secured to the shaft 4. For example, instances have been experienced where such a failure has occurred in the shaft 4 at a position indicated schematically at 9 in figure 2, where the rotor 1 abuts the balance unit 2. Because the load applied to the shaft 4 is tensile, this type of failure results in all of the hardware above (in the orientation illustrated) the failure site becoming released. This can be very dangerous to people working in the vicinity of the assembly.

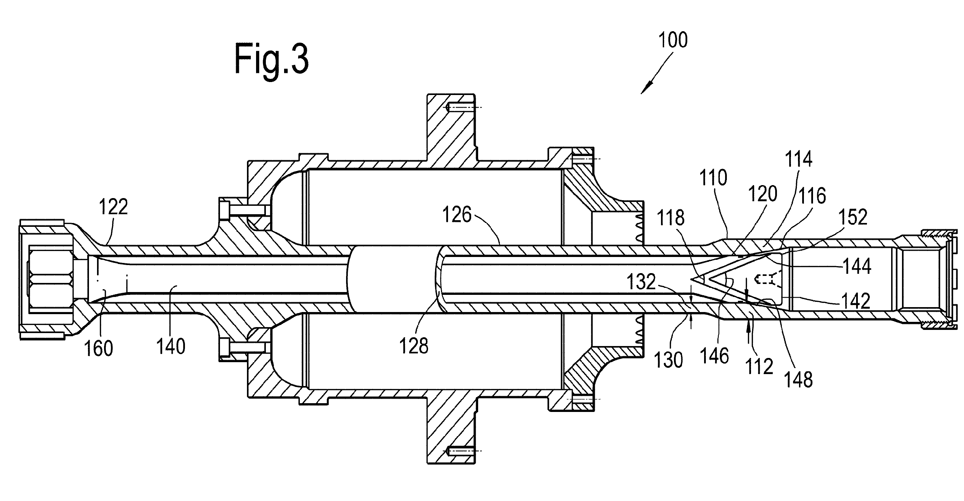

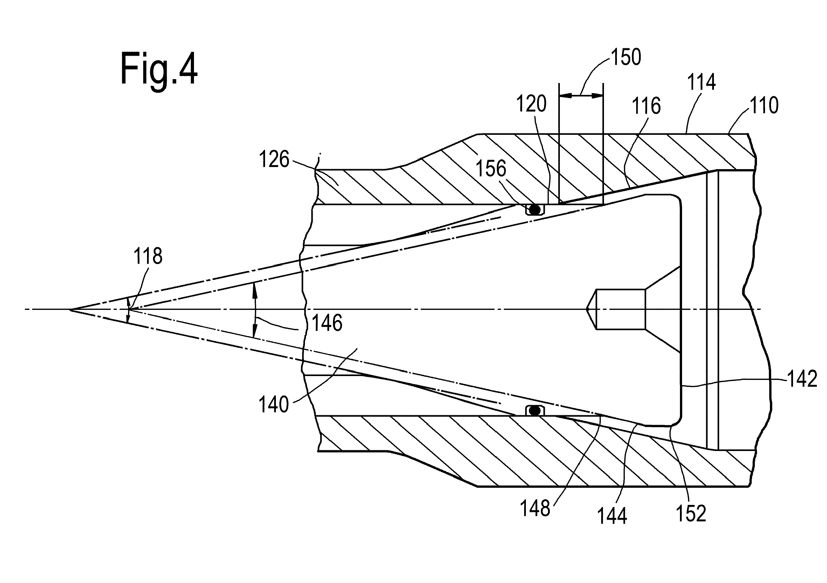

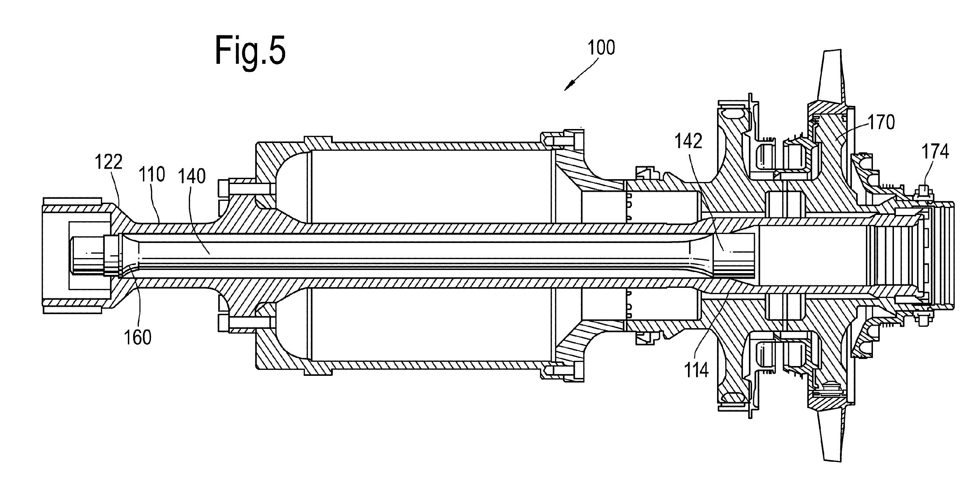

Referring to Figures 3 to 5, a fuse assembly according to an embodiment of the disclosure is designated generally by the reference numeral 100.

The fuse assembly 100 comprises an elongate tubular member 110, and a catcher rod 140.

The elongate tubular member 110 has a first end portion 114, an opposite second end portion 122, and a centre portion 126 positioned between the first end portion 114 and the second end portion 122.

A cross-sectional area 128 of the centre portion 126 is less than a cross-sectional area 112 of the remainder of the tubular member 110.

The centre portion 126 of the tubular member 110 is provided with an inspection feature 130. A cross-sectional area 132 of the inspection feature 130 is less than a cross-sectional area 128 of the remainder of the centre portion 126.

The catcher rod 140 has a first end portion 142, and an opposite second end portion 160.

The catcher rod 140 is accommodated concentrically within the tubular member 110.

The second end portion 160 of the catcher rod 140 is secured to the second end portion 122 of the tubular member 110.

The first end portion 114 of the tubular member 110 is provided with a first divergent conical portion 116. The first end portion 142 of the catcher rod 140 is provided with a second divergent conical portion 144.

The first end portion 114 of the tubular member 110 has a first cylindrical portion 120 proximal to the first divergent conical portion 116. The first end portion 142 of the catcher rod 140 has a second cylindrical portion 148 proximal to the second divergent conical portion 144.

The first end portion 142 of the catcher rod 140 is provided with a third cylindrical portion 152 distal to the second divergent conical portion 144.

The catcher rod 140 is positioned concentrically within the tubular member 110 with the second divergent conical portion 144 being axially separated from the first divergent conical portion 116 by a pre-determined distance 150.

The second cylindrical portion 148 is slidably accommodated within the first cylindrical portion 120. In the arrangement of the present disclosure the second cylindrical portion 148 is a loose running fit within the first cylindrical portion 120. In other words the fit between the first cylindrical portion 120 and the second cylindrical portion 148 can be categorised as ISO H11/c11 (hole basis) or C11/h11 (shaft basis).

The catcher rod 140 is positioned concentrically within the tubular member 110 with the second divergent conical portion 144 being axially separated from the first divergent conical portion 116 by a pre-determined distance 150.

The second cylindrical portion comprises a seal element 156 in the form of an 'O'-ring seal. The 'O'-ring seal is positioned along the second cylindrical portion 148.

In use, in the event of a breakage of the tubular member 110, the second divergent conical portion 144 engages with the first divergent conical portion 116 to limit the axial movement of the tubular member 110.

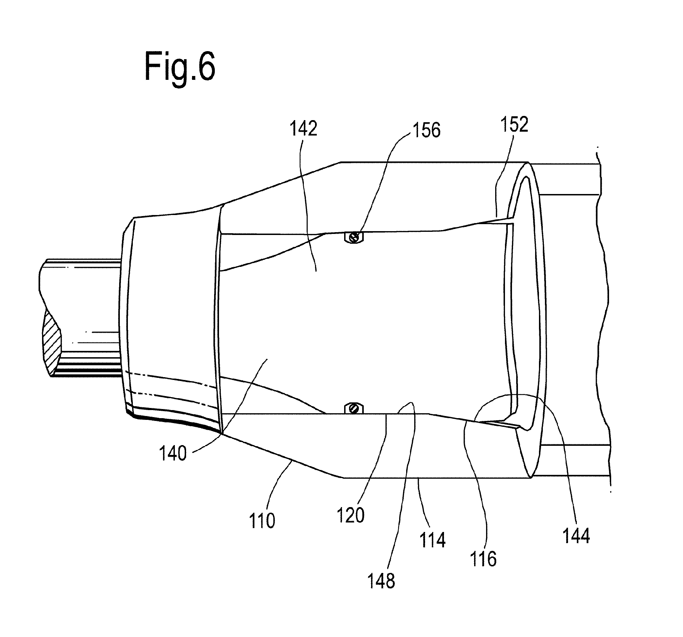

Figure 6 shows a cut-away section of a balance simulator shaft incorporating a fuse assembly 100 in which a failure of the tubular member 110 has been initiated. The engagement of the second divergent conical portion with the first divergent conical portion can be clearly seen in this figure.

Except where mutually exclusive, any of the features may be employed separately or in combination with any other features and the disclosure extends to and includes all combinations and sub-combinations of one or more features described herein.

The foregoing description of various aspects of the disclosure has been presented for purposes of illustration and description. It is not intended to be exhaustive or to limit the disclosure to the precise form disclosed, and obviously, many modifications and variations are possible. Such modifications and variations that may be apparent to a person of skill in the art are included within the scope of the disclosure as defined by the accompanying claims.

## Claims

1. A tension fuse assembly (100) comprising:
an elongate tubular member (110), the tubular member (110) having a first end portion (114) and an opposite second end portion (122); and
a catcher rod (140), the catcher rod (140) having a first end portion (142) and an opposite second end portion (160), the catcher rod (140) being accommodated concentrically within the tubular member (110), the second end portion (160) of the catcher rod (140) being secured to the second end portion (122) of the tubular member (110),
wherein the first end portion (114) of the tubular member (110) is provided with a first divergent conical portion (116), the first end portion (142) of the catcher rod (140) is provided with a second divergent conical portion (144), and
in the event of breakage of the tubular member (110), the second divergent conical portion (144) engages with the first divergent conical portion (116) to limit the axial movement of the tubular member (110).

2. The tension fuse assembly (100) as claimed in Claim 1, wherein the first divergent conical portion (116) has a first vertex angle, and the second divergent conical portion (144) has a second vertex angle, and the first vertex angle is greater than the second vertex angle.

3. The tension fuse assembly (100) as claimed in Claim 1 or Claim 2, wherein the first end portion (114) of the tubular member (110) comprises a first cylindrical portion (120) proximal to the first divergent conical portion (116), and the first end portion (142) of the catcher rod (140) comprises a second cylindrical portion (148) proximal to the second divergent conical portion (144), the second cylindrical portion (148) being slidably accommodated within the first cylindrical portion (120).

4. The tension fuse assembly (100) as claimed in Claim 3, wherein the second cylindrical portion (148) is a loose running fit within the first cylindrical portion (120).

5. The tension fuse assembly (100) as claimed in any one of Claims 1 to 4, wherein the catcher rod (140) is positioned concentrically within the tubular member (110) with the second divergent conical portion (144) being axially separated from the first divergent conical portion (116) by a pre-determined distance (150).

6. The tension fuse assembly (100) as claimed in any one of Claims 1 to 5, wherein the second cylindrical portion (148) comprises a seal element (156), the seal element (156) configured to rub against the first cylindrical portion (120).

7. The tension fuse assembly (100) as claimed in Claim 6, wherein the seal element (156) is selected from the group comprising 'O'-rings, lip seals and ring seals.

8. The tension fuse assembly (100) as claimed in any one of Claims 1 to 7, wherein the tubular member (110) further comprises a centre portion (126) interposed between the first end portion (114) and the second end portion (122), the first end portion (114) having a first diameter, the second end portion (122) having a second diameter, the centre portion (126) having a third diameter, and the third diameter (xxx) being less than the first and second diameters.

9. The tension fuse assembly (100) as claimed in Claim 8, wherein the centre portion (126) comprises an inspection feature (130), a cross-sectional area (132) of the tubular member (110) at the inspection feature (130) being less than the cross-sectional area (112) of the tubular member (110) along the remainder of the centre portion (126).

10. The tension fuse assembly (100) as claimed in any one of Claims 1 to 9, wherein the first end portion (142) of the catcher rod (140) further comprises a third cylindrical portion (152) distal to the second divergent conical portion (144).

11. A method of applying a tensile load to a component (170), using a tension fuse assembly (100), the tension fuse assembly (100) comprising an elongate tubular member (110) and a catcher rod (140), the tubular member (110) having a first end portion (114) and a second end portion (122), the catcher rod (140) having a first end portion (142) and a second end portion (160), the first end portion (114) of the tubular member (110) being provided with a first divergent conical portion (116), the first end portion (142) of the catcher rod (140) being provided with a second divergent conical portion (144), the method comprising the steps of:
positioning the catcher rod (140) concentrically within the tubular member (110);
securing the second end portion (160) of the catcher rod (140) to the second end portion (122) of the tubular member (110);
positioning the component (170) over the first end portion (114) of the tubular member (110);
securing a tensioning mechanism (180) to the first end portion (114) of the tubular member (110);
applying a tensile force between the first end portion (114) of the tubular member (110) and the component (170); and
in the event of a breakage of the tubular member (110), the second divergent conical portion (144) engages with the first divergent conical portion (116) to limit the axial movement of the tubular member (110), the component (170) and the tensioning mechanism (180).

12. The method as claimed in Claim 11, wherein the step of positioning the catcher rod (140) concentrically within the tubular member (110) comprises the step of:
positioning the catcher rod (140) concentrically within the tubular member (110) such that the second divergent conical portion (144) is axially separated from the first divergent conical portion (116) by a pre-determined distance (150).
